# EUROPÄISCHE PATENTSCHRIFT

(11) **EP 0 446 599 B1**
(45) Veröffentlichungstag und Bekanntmachung des Hinweises auf die Patenterteilung: **04.05.1994**
(21) Anmeldenummer: 91101445.4
(22) Anmeldetag: 04.02.1991
(51) Int. Cl.: B66C 23/42, B66C 13/54

(54) **Kranfahrzeug**
Vehicle mounted crane
Grue montée sur un véhicule

(30) Priorität: 12.02.1990 DE 9001589 U
(43) Veröffentlichungstag der Anmeldung: 18.09.1991
(73) Patentinhaber: LIEBHERR-WERK EHINGEN GmbH, 89584 Ehingen (DE)
(72) Erfinder: Becker, Rudolf, W-7930 Ehingen/Donau (DE)
(74) Vertreter: Gossel, Hans K., Dipl.-Ing.

(56) Entgegenhaltungen:
- DE-A- 2 253 068
- DE-A- 2 450 003
- DE-A- 3 721 673
- DE-B- 1 281 652
- DE-U- 8 904 010
- FR-A- 2 286 785
- GB-A- 2 005 223
- US-A- 3 398 984

## Beschreibung

Die Erfindung betrifft ein Kranfahrzeug mit einem mindestens zweiachsigen Fahrgestell, auf dem durch einen aus einem Außen- und einem Innenring bestehenden Drehkranz ein Kranoberwagen gelagert ist, mit einem auf dem Kranoberwagen schwenkbar gelagerten, vorzugweise austeleskopierbarem Ausleger, der in Straßenfahrstellung auf einem Stützbock des Fahrgestells ablegbar ist, und mit einer Kabine für den Kran- und Straßenfahrbetrieb.

Fahrzeugkräne dieser Art werden in zwei Betriebszuständen betrieben, nämlich einmal im Fahrbetrieb, vorzugsweise Straßenfahrbetrieb, und zum anderen im Kranbetrieb, in dem das Fahrgestell üblicherweise durch ausfahrbare oder ausschwenkbare Stützen abgestützt ist und die Hebe- und Transportarbeiten durch Verschwenken des Auslegers und Drehen des Oberwagens ausgeführt werden. Entsprechend diesen zwei Betriebsweisen wird eine Kabine benötigt, die dem Fahrer während der Straßenfahrt die erforderliche Übersicht über die Straße gewährt und die im Kranbetrieb eine ständige Beobachtung des Kranhakens während der Hebe- und Versatzarbeiten ermöglicht.

Um diesen Forderungen gerecht zu werden, ist es bekannt, bei einem Fahrzeugkran der eingangs angegebenen Art zwei Kabinen vorzusehen, von denen eine an dem Fahrgestell in der Weise angeordnet ist, daß der Fahrer eine gute Übersicht über die Straße hat, und die andere für den Kranbetrieb an dem Oberwagen mit Ausrichtung zur Auslegerspitze hin. Die Anordnung von je einer Kabine für die Straßenfahrt und den Kranbetrieb ist aber aufwendig und verteuert das Kranfahrzeug. Es sind daher auch schon Kranfahrzeuge vorgeschlagen und hergestellt worden, die mit nur einer kombinierten Kabine für den Fahr- und Kranbetrieb versehen sind.

Bei derartigen bekannten Ein-Kabinen-Ausführungen für den Fahr- und Kranbetrieb sind die Kabinen entweder an dem Fahrgestell oder aber an der Drehbühne in Auslegerrichtung angebracht. Bei Anordnung der Kabine an dem Fahrgestell sind die Sichtverhältnisse im Kranbetrieb in den meisten Stellungen des Oberwagens ungünstig, da die Kabine nicht mitschwenkt.

Ist die Kabine jedoch auf dem Oberwagen befestigt, besteht bei Fahrbetrieb eine erhebliche Sichtbehinderung durch den Ausleger, so daß eine Zulassung nach der StVZO für den Straßenfahrbetrieb in der Regel nicht erfolgen kann. Solche Krane sind als langsam fahrende Baustellenfahrzeuge (Rough-Terrain-Krane) bekannt, die beim Verfahren auf der Baustelle zur Verbesserung der Sichtverhältnisse den Ausleger etwas anheben müssen. Für den allgemeinen Straßenverkehr können derartige Krane grundsätzlich nicht zugelassen werden.

Weiterhin ist ein Kranfahrzeug der eingangs angegebenen Art mit einer doppelten Fahrerkabine bekannt, die am Oberwagen angeordnet ist. Für den Straßenfahrbetrieb ist in dieser doppelten Fahrerkabine ein Sitz vorgesehen, der dem Fahrer eine Sicht auf die Straße in dem Ausleger entgegengesetzter Richtung gewährt. Für den Kranbetrieb setzt sich der Fahrer auf einen weiteren vorgesehenen Sitz, der dem Kranführer eine Sicht in Richtung der Auslegerspitze ermöglicht. Diese kombinierte Kabine ist nicht nur sehr groß, sie benötigt auch zwei Steuerstände für den Straßenfahr- und Fahrbetrieb.

Aufgabe der Erfindung ist es, einen Fahrzeugkran der eingangs angegebenen Art zu schaffen, der nur eine einzige Kabine sowohl für den Straßenfahrbetrieb als auch den Kranbetrieb aufweist, die dem Fahrer bzw. Kranführer in allen Betriebszuständen optimale Sicht gewährt.

Erfindungsgemäß wird diese Aufgabe bei einem Kranfahrzeug der gattungsgemäßen Art dadurch gelöst, daß an dem mit dem Kranoberwagen verbundenen Ring des Drehkranzes ein Tragring drehbar gelagert ist, an dem die Kabine befestigt ist, und daß die Kabine oder der Tragring entweder mit dem Fahrgestell oder mit dem Kranoberwagen verbindbar sind.

Bei dem erfindungsgemäßen Fahrzeugkran ist eine kombinierte Kran- und Fahrerkabine vorgesehen, von der aus alle Fahrbewegungen und Kranbewegungen gesteuert werden können. In der Straßenfahrstellung ist die Kabine mit dem Fahrgestell verbunden und befindet sich in Fahrtrichtung gesehen auf der linken Seite des Auslegers, wobei die Blickrichtung des Fahrers dem Ausleger entgegengesetzt ist.

Soll die Kabine in die Arbeitsstellung für den Kranbetrieb gebracht werden, wird die Verbindung der Kabine mit dem Fahrgestell gelöst, so daß dieser frei auf dem Ring des Oberwagens oder der Drehbühne drehbar ist. Um die Kabine nunmehr um 180 Grad in die Kranbetriebsstellung zu verschwenken, wird der Ausleger so hoch geschwenkt, daß er beim Drehen der Kabine um 180 Grad über diese hinwegschwenken kann. Der mit dem Oberwagen verbundene und das Gegengewicht sowie die Winden tragende und entgegen der Auslegerrichtung auskragende Tragbock kann dabei behinderungsfrei an der Kabine vorbeischwenken, weil die Kabine in Gegenrichtung um diesen Bock herumgedreht wird. Sobald die Kabine um 180 Grad aus ihrer Fahrstellung in ihre Kranbetriebsstellung gedreht worden ist, wird sie mit dem Oberwagen verbolzt oder in sonstiger Weise verbunden. In dieser Stellung hat nun der Kranführer eine optimale Sicht in Richtung der zu hebenden Last.

Die Verschwenkung der Kabine aus der Straßenfahrstellung in die Kranbetriebsstellung kann dadurch geschehen, daß diese zunächst noch mit dem Fahrgestell verbunden bleibt, bis der Oberwagen in der beschriebenen Weise um 180 Grad gedreht worden ist. Erst dann wird die Verbolzung oder Verbindung der Kabine mit dem Fahrgestell gelöst und mit dem Oberwagen hergestellt.

Der die Kabine tragende Tragring kann durch ein Wälzlager, vorzugsweise ein Kugellager, an dem den Kranoberwagen tragenden Ring gelagert sein. Diese Art der Lagerung ermöglicht eine leichte Drehung, die gegebenenfalls auch von Hand vorgenommen werden kann.

Der erfindungsgemäße Fahrzeugkran kann nach der StVZO für den Straßenfahrbetrieb mit einer höchsten Fahrgeschwindigkeit von etwa 80 km/h zugelassen werden. Bei derartigen Fahrgeschwindigkeiten ist jedoch eine mechanische Kupplung des Lenkrades und der Lenksäule mit dem Lenkgetriebe erforderlich. In weiterer Ausgestaltung der Erfindung ist daher vorgesehen, daß in der Straßenfahrstellung, in der die Kabine mit dem Fahrgestell verbunden ist, das Lenkrad und die Lenksäule durch eine mechanische Kupplung und mechanische Übertragungsglieder mit dem Lenkgetriebe verbindbar sind. Bei dieser Verbindung kann es sich um einfache Steckverbindungen oder andere Verbindungen bekannter Art handeln. Bei Fahrzeugkränen der eingangs angegebenen Art sind üblicherweise zusätzlich zu der aus mechanischen Übertragungsgliedern bestehenden Steuerung eine rein hydrostatische Lenkung vorhanden. Die Lenkhydraulik dieser hydrostatischen Lenkung kann im Straßenfahrbetrieb, in der das Lenkrad durch mechanische Übertragungsglieder mit dem Lenkgetriebe verbunden ist, unterstützend als Servolenkung wirksam sein.

Im Kranbetrieb ist die mechanische Kupplung zum Lenkgetriebe aufgehoben, so daß nur noch die hydrostatische Lenkung wirksam ist.

Nach einer weiteren Ausführungsform der Erfindung ist eine Schalteinrichtung vorgesehen, die bei gelöster mechanischer Kupplung und bei allein wirksamer hydrostatischer Lenkung die Schaltbarkeit der oberen Gänge des Lastschaltgetriebes zum Verfahren des Kranfahrzeuges verhindert. Durch diese Sicherheitsschaltung ist sichergestellt, daß dann die maximale Fahrgeschwindigkeit nur noch etwa 40 km/h beträgt, was für eine alleinige hydrostatische Lenkung zulässig ist. Der Kranführer kann somit bei dem erfindungsgemäßen Kran nur dann auf Schnellfahrt gehen, wenn er zuvor die mechanische Lenkverbindung eingerückt hat. Dies ist wiederum nur möglich, wenn zuvor die Kranführerkabine in Fahrstellung geschwenkt und die Verbindung zu dem Fahrgestell hergestellt worden ist.

Der erfindungsgemäße Fahrzeugkran gewährt mit nur einer Kran- und Fahrerkabine optimale Sichtverhältnisse sowohl beim Kran- als auch beim Fahrbetrieb. Damit ist eine wirtschaftliche und technisch einwandfreie Lösung für eine Ausführungsform eines Fahrzeugkranes mit nur einer einzigen Kabine gegeben. Der erfindungsgemäße Fahrzeugkran ist auch bei kalter Witterung sofort nach dme Eintreffen auf der Baustelle einsetzbar, da ein Beheizen einer weiteren Kabine entfällt.

Ein Ausführungsbeispiel der Erfindung wird nachstehend anhand der Zeichnung näher erläutert. In dieser zeigt
- Fig.1: eine Draufsicht auf einen Fahrzeugkran mit nur einer Kabine für den Fahr- und Kranbetrieb,
- Fig.2: einen Schnitt durch den das Fahrgestell mit dem Oberwagen verbindenden Drehkranz in vergrößerter Darstellung längs der Linie A-A in Fig.1
- Fig.3: eine Ansicht des Fahrzeugkrans nach Fig.1 in Fahrstellung von links gesehen,
- Fig.4: den Fahrzeugkran nach Fig.3 in Fahrstellung von der rechten Seite hergesehen,
- Fig.5: den Fahrzeugkran nach den Fig. 1,3 und 4 von vorn gesehen,

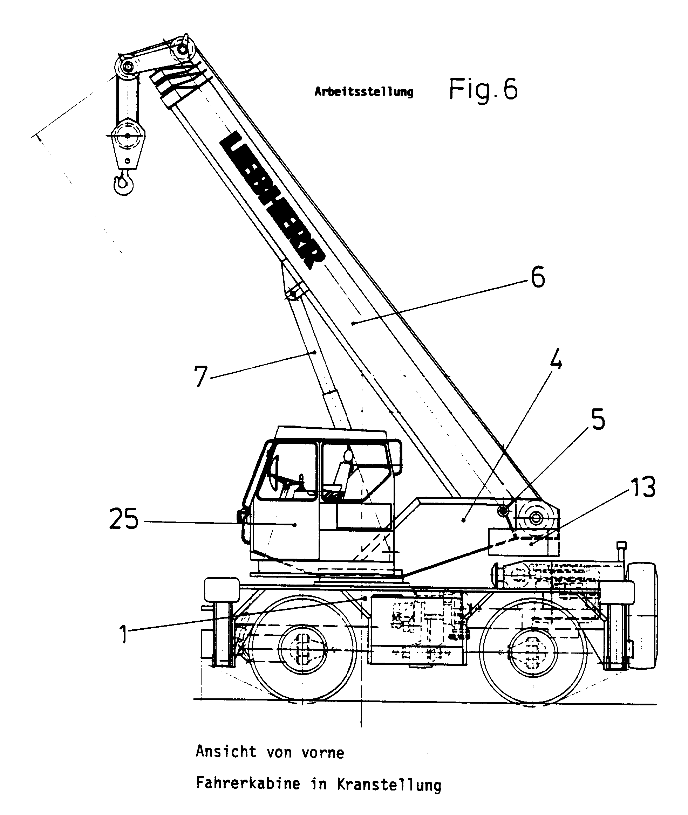

- Fig.6: den Fahrzeugkran nach Fig.1 von links her gesehen mit der in die Kranbetriebsstellung geschwenkten und dem Oberwagen verbolzten Fahrerkabine,

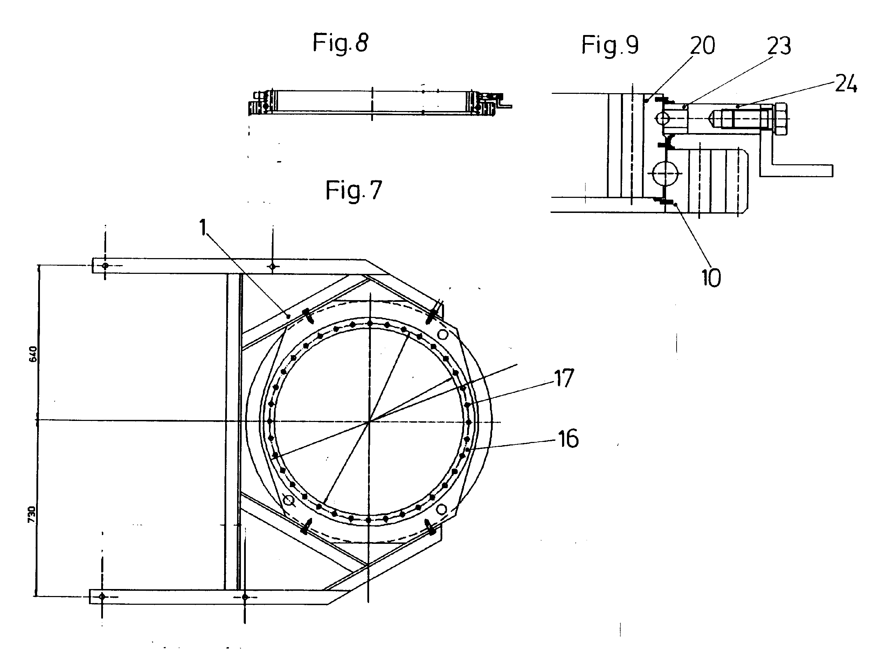

- Fig.7: eine Draufsicht auf den mit dem Fahrgestell verbundenen Drehkranz bei abgehobener Drehbühne
- Fig.8: einen Schnitt durch den Drehkran und
- Fig.9: einen der Fig.2 entsprechenden Schnitt durch den Drehkranz

Der Fahrzeugkran besteht aus einem zweiachsigen Fahrgestell 1, auf dem durch einen Drehkranz 2 der Kranoberwagen 3 drehbar gelagert ist. An der Drehbühne des Oberwagens 3 ist ein in der Fahrstellung nach vorne hin auskragender Bock 4 befestigt, an dem um die Achse 5 schwenkbar der Teleskopausleger 6 gelagert ist. Weiterhin ist an dem Bock 4 der Wippzylinder 7 gelagert, durch den der Ausleger 6 verschwenkbar ist. Die einzelnen Züge des Teleskopauslegers sind in bekannter Weise hydraulisch ausfahrbar.

In der Straßenfahrstellung ist der Ausleger auf einem Stützbock 9 ablegbar, der mit dem Fahrgestell 1 verbunden ist.

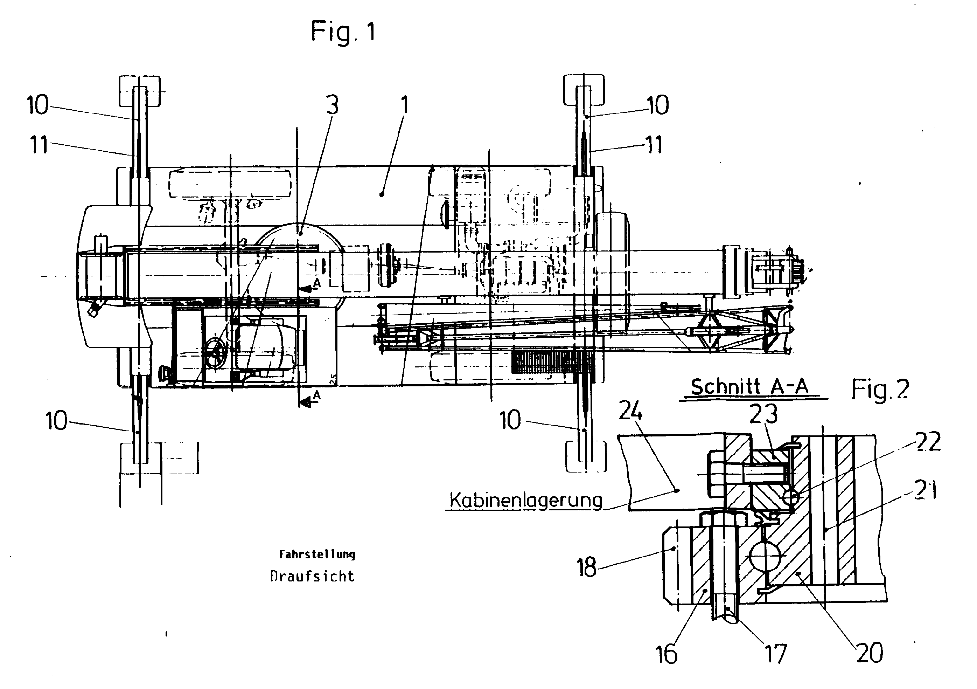

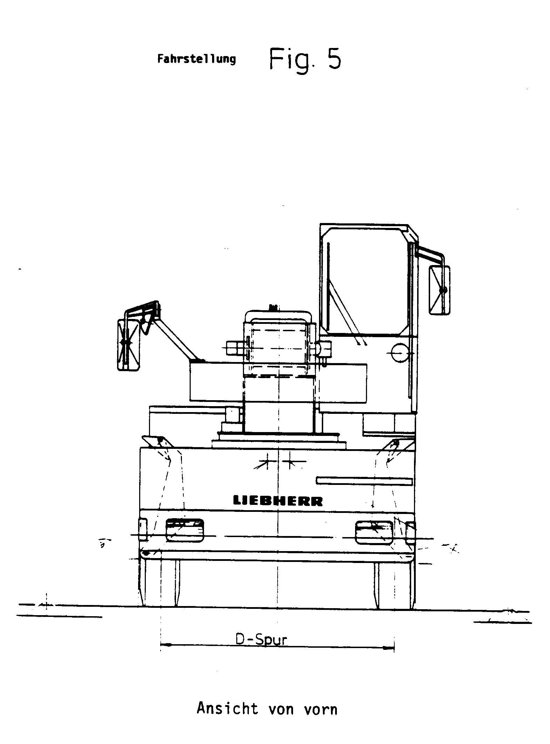

Mit den Eckbereichen des Fahrgestells 1 sind weiterhin schwenkbar Stützen 10 verbunden, die durch Hydraulikzylinder 11 in die aus Fig.5 ersichtliche Lage hochschwenkbar und die aus Fig.1 ersichtliche Lage ausschwenkbar sind.

An dem äußeren Ende des Bocks 4 ist das Gegengewicht 13 befestigt.

An dem Fahrgestell 1 ist der Außenring 16 des Drehkranzes 2 durch eine Reihe von Schrauben 17 befestigt. Der Außenring 16 ist mit einer Außenverzahnung 18 versehen, mit der das nicht dargestellte Antriebsritzel des auf der Drehbühne angeordneten Drehwerks kämmt.

Soweit ist der vorstehend beschriebene Fahrzeugkran bekannter Bauart, so daß auf eine nähere Beschreibung verzichtet werden kann.

Der Innenring 20 des Drehkranzes 2 ist in üblicher Weise durch Kugeln an dem Außenring 16 gelagert. Weiterhin ist der Innenring 20 mit Bohrungen 21 zur Befestigung der Drehbühne 3 versehen.

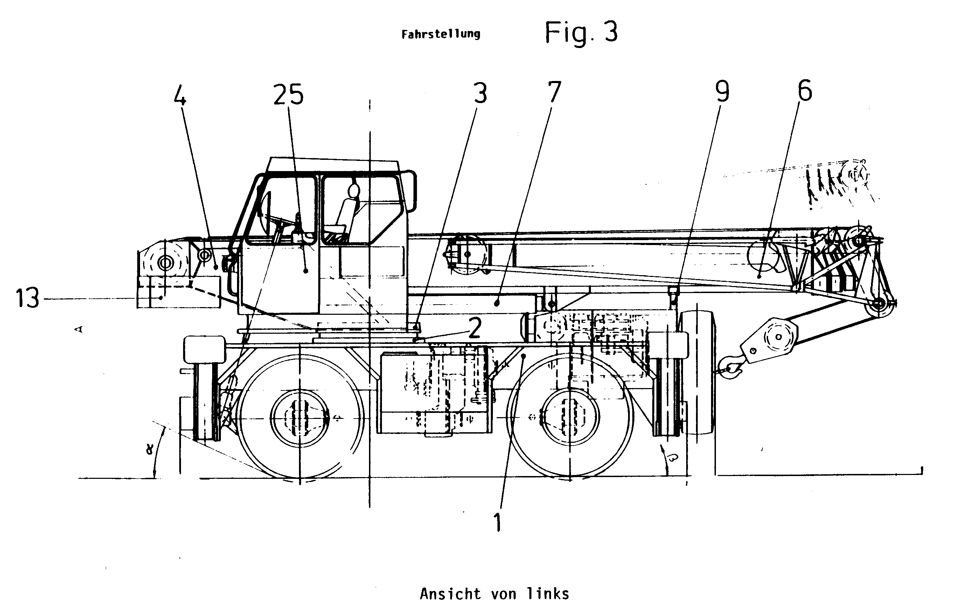

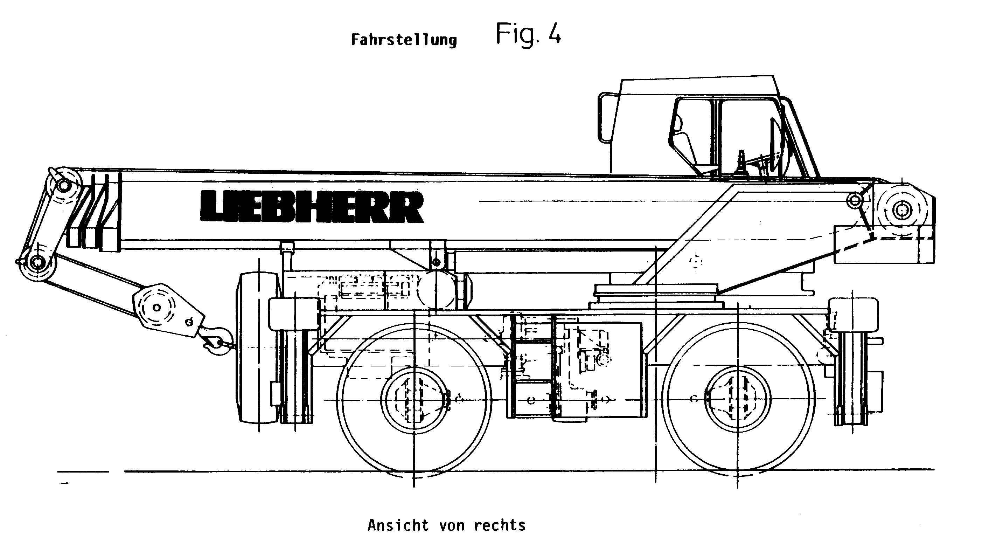

An den oberen Bereich des Innenringes 20 ist durch eine Kugellagerung 22 ein weiterer äußererer Ring 23 gelagert. An diesem äußeren Ring 23 ist durch Schrauben eine Tragkonsole 24 befestigt, die die Fahrer- und Kranführerkabine 25 trägt. Durch den Tragring 23 ist die Fahrerkabine 25 somit drehbar mit dem Innenring 20 verbunden. In der aus den Fig.1,3,4 und 5 ersichtlichen Fahrstellung ist die über die Konsole 24 an dem Tragring 23 gelagerte und abgestützte Fahrer- und Kranführerkabine 25 über eine nicht dargestellte weitere Bolzenverbindung oder Verriegelung mit dem Fahrgestell 1 fest verbunden.

In der aus Fig.5 ersichtlichen Kranarbeitsstellung ist die Verbindung zwischen der Fahrerkabine 25 und dem Fahrgestell 1 aufgehoben und die Fahrerkabine 25 durch eine zusätzliche Verbindung mit dem Innenring 20 oder der Drehbühne 3 verbolzt oder verbunden. In der aus Fig.5 ersichtlichen Kranarbeitsstellung ist somit die Kabine 25 undrehbar an dem Oberwagen 3 gehalten.

Zur Umstellung von der Straßenfahrstellung auf die Kranarbeitsstellung ist somit die Drehbühne relativ zu der Kabine 25 um 180 Grad zu drehen, so daß der Bock 4 mit dem Gegengewicht 13 nach hinten weist. Um diese Drehung vollziehen zu können, ist der Ausleger über dem Wippzylinder 7 so hoch zu schwenken, daß dieser frei über die Kabine hinweggedreht werden kann. In der um 180 Grad gedrehten Stellung ist sodann die Verbolzung der Kabine 25 it dem Fahrgestell 1 zu lösen und die Verbolzung zu dem Kranoberwagen herzustellen. Natürlich kann die Drehung der Kabine 25 auch von Hand vorgenommen werden, wobei dann schon vor der Drehung die Verbindung zum Kranoberwagen gelöst wird.

## Patentansprüche

1. Fahrzeugkran
mit einem mindestens zweiachsigen Fahrgestell (1), auf dem durch einen aus einem Außen- und einem Innenring (16,20) bestehenden Drehkranz (2) ein Kranoberwagen (3) gelagert ist,
mit einem auf dem Kranoberwagen (3) schwenkbar gelagerten, vorzugsweise austeleskopierbarem Ausleger (6), der in Straßenfahrstellung auf einem Stützbock (9) des Fahrgestells (1) ablegbar ist, und
mit einer Kabine (25) für den Kran- und Straßenfahrbetrieb,
**dadurch gekennzeichnet**,
daß an dem mit dem Oberwagen (3) verbundenen Ring (20) des Drehkranzes (2) ein Tragring (23) drehbar gelagert ist, an dem die Kabine (25) befestigt ist, und daß die Kabine (25) oder der Tragring (23) entweder mit dem Fahrgestell (1) oder mit dem Kranoberwagen (3) verbindbar sind.

2. Fahrzeugkran nach Anspruch 1, dadurch gekennzeichnet, daß der Tragring (23) durch ein Wälzlager (22) an dem den Kranoberwagen (3) tragenden Ring (20) gelagert ist.

3. Fahrzeugkran nach Anspruch 1 oder 2, dadurch gekennzeichnet, daß in der Straßenfahrstellung, in der die Kabine (25) mit dem Fahrgestell (1) verbunden ist, das Lenkrad und die Lenksäule durch eine mechanische Kupplung und mechanische Übertragungsglieder mit dem Lenkgetriebe verbindbar sind.

4. Fahrzeugkran nach Anspruch 3, dadurch gekennzeichnet, daß eine Schalteinrichtung vorgesehen ist, die bei gelöster mechanischer Kupplung und allein wirksamer hydrostatischer Lenkung die Schaltbarkeit der oberen Gänge des Lastschaltgetriebes zum Verfahren des Kranfahrzeugs verhindert.

## Claims

1. A vehicle-mounted crane with a chassis (1) with at least two axles, on which chassis there is mounted an upper crane chassis (3) by means of a slewing track ring (2) which consists of an outer ring (16) and an inner ring (20),
with a jib (6) preferably capable of an outward telescopic movement, mounted for pivoting on the upper crane chassis (3), which jib can, in the road-travel position, be laid down on a supporting block (9) of the chassis (1), and
with a cab (25) for the crane and road-travel operations,
**characterized in that**
on the ring (20) of the slewing track ring (2) which is connected to the upper chassis (3), there is mounted for rotation a bearing ring (23) whereto the cab (25) is secured, and that the cab (25) or the bearing ring (23) can be connected either to the chassis (1) or to the upper crane chassis (3).

2. A vehicle-mounted crane according to claim 1, characterized in that the bearing ring (23) is mounted on the ring (20) carrying the upper crane chassis (3) by means of a roller bearing (22).

3. A vehicle-mounted crane according to claim 1 or 2, characterized in that in the road-travel position, wherein the cab (25) is connected to the chassis (1), the steering wheel and the steering column can be connected to the steering mechanism by means of a mechanical clutch and mechanical transmission elements.

4. A vehicle-mounted crane according to claim 3, characterized in that provision is made for a switching device which, when the mechanical clutch is released and only the hydrostatic steering is operative, prevents the upper gears of the power shift gearing from being engaged for the displacement of the motor vehicle.

## Revendications

1. Grue montée sur un véhicule, comprenant au moins un mécanisme de roulement (1) à deux essieux sur lequel est logé un wagon supérieur de grue (3) par une couronne d'orientation (2) constituée d'un anneau extérieur et d'un anneau intérieur (16,20),
avec un bras (6) monté de façon pivotante sur le wagon supérieur de grue (3) et, de préférence, télescopique qui peut être déposé en position de déplacement sur route sur un chevalet (9) du mécanisme de roulement (1), et
avec une cabine (25) pour le fonctionnement de la grue et le fonctionnement de déplacement sur route,
caractérisée
en ce qu'un anneau de support (23) est monté à rotation sur l'anneau (20) relié au wagon supérieur (3) de la couronne d'orientation (2), et auquel est fixée la cabine (25), et en ce que la cabine (25) ou l'anneau de support (23) peuvent être reliés soit avec le mécanisme de roulement (1), soit avec le wagon supérieur de grue (3).

2. Grue montée sur un véhicule selon la revendication 1, caractérisée en ce que l'anneau de support (23) est logé par un palier à roulement (22) à l'anneau (20) supportant le wagon supérieur de grue (3).

3. Grue montée sur un véhicule selon la revendication 1 ou 2, caractérisée en ce qu'en position de déplacement sur route, dans laquelle la cabine (25) est reliée au mécanisme de roulement (1), le volant de direction et la colonne de direction peuvent être reliés par un accouplement mécanique et des organes de transmission mécaniques au mécanisme de direction.

4. Grue montée sur un véhicule selon la revendication 3, caractérisée en ce qu'il est prévu un mécanisme de manoeuvre qui empêche, lorsque l'accouplement mécanique est supprimé et que la direction hydrostatique agit seule, la possibilité de manoeuvrer les vitesses supérieures de la boîte de vitesses pour le déplacement de la grue montée sur véhicule.
